# FASCICULE DE BREVET EUROPEEN

(11) **EP 1 167 997 B1**
(45) Date de publication et mention de la délivrance du brevet: **20.08.2003**
(21) Numéro de dépôt: 01401584.6
(22) Date de dépôt: 15.06.2001
(51) Int. Cl.: G01S 17/42, G01S 17/88, G01S 7/48, G01S 7/481, B64G 1/68

(54) **Dispositif de mesure de pollution spatiale**
Vorrichtung zum Messen von Raumverschmutzung
Device for measuring pollution in space

(30) Priorité: 22.06.2000 FR 0008512
(43) Date de publication de la demande: 02.01.2002
(73) Titulaire: Thales, 75008 Paris (FR)
(72) Inventeur: Thillot, Marc, 94117 Arcueil Cedex (FR); Midavaine, Thierry, 94117 Arcueil Cedex (FR)
(74) Mandataire: Vigand, Régis Louis Michel

(56) Documents cités:
- FR-A- 2 769 991
- US-A- 5 153 407

## Description

L'invention concerne le domaine de la pollution spatiale. La pollution spatiale est la présence dans l'espace, généralement en orbite autour de la planète Terre, de débris spatiaux. Les débris spatiaux sont d'origine humaine, ce sont par exemple des restes d'étages de fusée ou de satellite largués par ceux-ci soit au cours de leur mise sur orbite soit pendant leur évolution sur orbite, ou bien d'origine naturelle. Les débris spatiaux considérés sont en particulier les débris non géostationnaires, les débris géostationnaires pouvant plus facilement être observés depuis la Terre par télescope.

La pollution croissante accentue le risque de collision entre les débris spatiaux et les satellites ainsi qu'entre les débris spatiaux et les engins spatiaux habités, ce qui pose un problème de sécurité pour les satellites et les engins spatiaux habités. Une possibilité consisterait à protéger les satellites ou les engins spatiaux habités contre un éventuel choc avec des débris spatiaux. Une autre possibilité consiste à s'arranger pour que les satellites et les engins spatiaux habités puissent éviter un éventuel choc avec des débris spatiaux. Pour cela, il est intéressant de connaître la répartition des débris spatiaux dans l'espace, et avantageusement leur trajectoire, ce qui correspond à un problème de mesure de la pollution spatiale.

Selon un premier art antérieur, des satellites sont équipés de plaques à impact, ce qui permet de dénombrer les débris spatiaux par comptage, à certaines périodes, des impacts de ces débris spatiaux sur la plaque. Un inconvénient de cette technique de comptage par impact est la restriction aux populations de débris spatiaux de petite taille. Un autre inconvénient est l'inadaptation au dénombrement des débris de grosse taille à cause de l'énergie cinétique de ces débris de grosse taille qui risque d'endommager la plaque, voire même le satellite.

Selon un deuxième art antérieur, un réseau de stations radar au sol, c'est-à-dire sur Terre, permet de suivre l'évolution des débris spatiaux de grosse taille. Un inconvénient de cette technique de suivi radar au sol est que les débris spatiaux de petite taille ne peuvent pas être repérés car leur SER (surface équivalente radar) est trop faible.

Or aujourd'hui, le premier art antérieur ne permet de dénombrer que des débris spatiaux dont la taille reste typiquement inférieure à la centaine de microns. Le deuxième art antérieur ne permet de dénombrer que des débris spatiaux dont la taille reste typiquement supérieure à la dizaine de centimètres. Pour une gamme de débris, que nous appellerons « intermédiaire », c'est-à-dire dont la taille est typiquement comprise entre 100µm et 10cm, les premier et deuxième arts antérieurs permettent difficilement la mesure de la pollution spatiale. Le blindage des satellites est généralement inefficace contre les débris de taille intermédiaire.

Selon un troisième art antérieur, pour les débris de petite taille, c'est-à-dire dont la taille est typiquement inférieure à 100µm, la mesure de la pollution spatiale est réalisée selon le premier art antérieur, tandis que pour les débris de grosse taille, c'est-à-dire dont la taille est typiquement supérieure à 10cm, la mesure de la pollution spatiale est réalisée selon le deuxième art antérieur. Enfin, pour les débris de taille intermédiaire, c'est-à-dire dont la taille est typiquement comprise entre 100µm et 10cm, une extrapolation est effectuée à partir de modèles théoriques et à partir des mesures de pollution spatiale réalisées pour les débris de petite et de grosse taille, respectivement selon les premier et deuxième arts antérieurs précités. Un inconvénient de cette technique par extrapolation est la difficulté de déterminer le domaine de validité et la précision des extrapolations effectuées.

Le document FR2769991 décrit un système de catalogage d'objets spatiaux comportant la détection, la localisation et la détermination des paramètres principaux de petits débris spatiaux, qui émet à l'aide d'un émetteur radar un faisceau. Ce système est monté sur la terre et pas sur satellite. L'art anterieur US5153407 décrit un dispositif pour éloigner des débris de l'espace extra-atmosphérique. Le dispositif est embarqué sur satellite et contient un système laser de poursuite de cible et de reconnaissance de débris.

L'invention propose un dispositif de mesure de la pollution spatiale, particulièrement adapté aux débris spatiaux de taille intermédiaire, c'est-à-dire dont la taille est typiquement comprise entre 100µm et 10cm. Ce dispositif est basé sur l'utilisation d'un illuminateur laser dans le domaine optique. Ce dispositif est destiné à être embarqué sur un satellite. Dans toute la suite du texte, sauf mention contraire, on parlera tout simplement de débris pour désigner les débris spatiaux.

Selon l'invention, il est prévu un dispositif de mesure de pollution spatiale, destiné à être embarqué sur satellite, comportant : au moins un illuminateur laser pouvant émettre dans l'espace un faisceau laser; des moyens de réception du signal rétroréfléchi par des débris spatiaux; des moyens de détection des débris spatiaux qui traversent le faisceau laser, déterminant la position angulaire desdits débris ; des moyens de localisation distance des débris détectés, déterminant les distances des débris détectés par rapport au satellite à l'aide du caractère impulsionnel et/ou modulé de l'émission du faisceau laser ; des moyens de classification des débris localisés, déterminant pour chaque débris localisé le produit de son albédo moyen par sa surface apparente.

L'invention sera mieux comprise et d'autres particularités et avantages apparaîtront à l'aide de la description ci-après et des dessins joints, donnés à titre d'exemples, où :
- la figure 1 représente schématiquement un diagramme fonctionnel préférentiel des différentes fonctions réalisées par un dispositif de mesure de pollution spatiale selon l'invention ;
- la figure 2 représente schématiquement une forme préférentielle de faisceau laser émis par l'illuminateur laser d'un dispositif de mesure de pollution spatiale selon l'invention ;
- les figures 3 à 6 représentent schématiquement différentes configurations d'un dispositif de mesure de pollution spatiale selon l'invention associant plusieurs illuminateurs laser différents.

Le dispositif de mesure de pollution spatiale est destiné à être embarqué sur un satellite, de manière à fonctionner lorsque ce satellite sera dans l'espace, par exemple en orbite autour de la Terre. Ce dispositif comporte au moins un illuminateur laser dans le domaine optique. Cet illuminateur laser envoie un faisceau laser d'une certaine forme dans l'espace. Ce faisceau laser est fixe par rapport au satellite, il n'y a donc par exemple pas de système de balayage associé à ce faisceau laser, ce qui est un avantage. Ce faisceau laser présente une certaine couverture spatio-temporelle de l'espace environnant observé. Lorsqu'un débris traverse le faisceau laser, le débris réfléchit une partie du faisceau laser et le renvoie vers des moyens de réception dont la ligne de visée est harmonisée avec celle de l'illuminateur laser, cette partie du faisceau laser étant par conséquent rétroréfléchie. Les moyens de réception fournissent des images de l'espace lesquelles peuvent ensuite être utilisées, directement ou indirectement, par différents moyens inclus dans ce dispositif.

Les images de l'espace contiennent, à un instant donné, tous les débris qui rétroréfléchissent le faisceau laser émis par l'illuminateur laser, c'est-à-dire tous les débris qui sont en train de traverser le faisceau laser émis par l'illuminateur laser. Les images de l'espace ont un format préférentiellement déterminé par la forme du faisceau laser. Si le faisceau laser a une forme qui couvre un champ bidimensionnel, les images de l'espace fournies par les moyens de réception seront préférentiellement bidimensionnelles. Si le faisceau laser a une forme qui couvre un champ monodimensionnel et que ce faisceau laser ne balaye pas l'espace, les images de l'espace fournies par les moyens de réception seront préférentiellement monodimensionnelles et pourront par exemple se réduire à un ensemble de signaux électriques délivrés avantageusement en parallèle. Un type de moyen, par exemple moyens de détection, indique qu'une fonction détection est réalisée, quelque soit la manière dont celle-ci est réalisée ; toutes les fonctions peuvent par exemple être réalisées par un unique microprocesseur, ou bien par exemple chacune par un composant dédié différent avec éventuellement une logique de gestion réalisant la coordination des différents composants entre eux.

A partir des images de l'espace fournies par les moyens de réception, des moyens de détection déterminent la position angulaire des débris présents sur les images de l'espace. Si, comme c'est le cas préférentiellement, le faisceau laser a une forme en nappe mince qui couvre un champ monodimensionnel, un débris traversant le faisceau laser correspondra à un point dans une image monodimensionnelle de l'espace, permettant la localisation angulaire du débris, c'est-à-dire la détermination d'une position angulaire du débris. En plus de la position angulaire du débris, les moyens de détection déterminent l'intensité ou amplitude du faisceau laser rétroréfléchi par le débris qui le traverse.

Puis, pour un débris détecté, les moyens de localisation distance déterminent, par exemple par télémétrie laser, la distance du débris détecté par rapport au satellite, c'est-à-dire la distance qu'il y a entre le débris détecté et le satellite portant le dispositif de mesure de la pollution spatiale.

Enfin, pour un débris localisé, en fait pour un débris détecté et localisé, des moyens de classification déterminent la classe du débris localisé, la classe d'un débris correspondant au produit de l'albédo moyen, c'est-à-dire réflectivité moyenne, par sa surface apparente, c'est-à-dire la surface équivalente qui peut être vue depuis le satellite. Pour déterminer la classe d'un débris localisé, les moyens de classification utilisent de préférence la distance de ce débris par rapport au satellite et l'amplitude du faisceau laser rétroréfléchi par le débris traversant ce même faisceau laser.

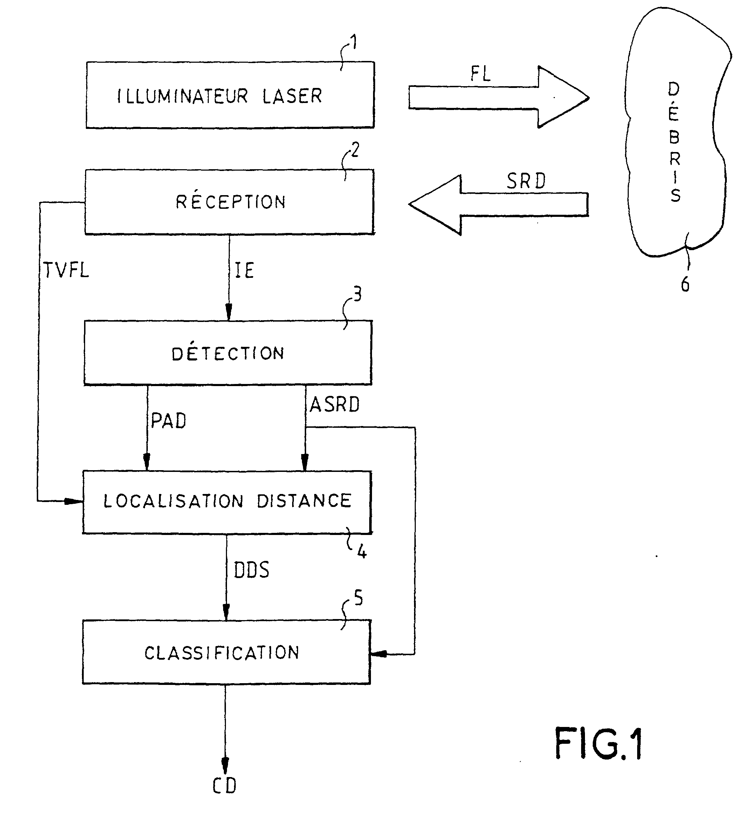

La figure 1 représente schématiquement un diagramme fonctionnel préférentiel des différentes fonctions réalisées par un dispositif de mesure de pollution spatiale selon l'invention. Un illuminateur laser 1 émet dans l'espace un faisceau laser FL. Supposons qu'un débris spatial 6 traverse le faisceau laser FL. Bien sûr, plusieurs débris peuvent traverser le faisceau laser FL en même temps, mais un seul débris est représenté sur la figure 1 pour des raisons de simplicité. Le débris 6 rétroréfléchit, lors de sa traversée du faisceau laser FL, c'est-à-dire lors de son passage dans le faisceau laser FL, une partie de ce même faisceau laser FL. La partie du faisceau laser FL qui est rétroréfléchie, c'est-à-dire réfléchie vers les moyens 2 de réception dont la ligne de visée est harmonisée avec la ligne de visée de l'illuminateur laser 1, par le débris 6 traversant le faisceau laser FL est appelée signal SRD lumineux rétroréfléchi par le débris 6. A partir de ce signal SRD lumineux rétroréfléchi par le débris 6 traversant le faisceau laser FL, les moyens 2 de réception fournissent une ou plusieurs images IE de l'espace sur laquelle ou sur lesquelles se trouve la position angulaire PAD du débris 6, la position angulaire PAD du débris 6 étant un simple point si le faisceau laser FL a une forme en nappe mince qui couvre un champ monodimensionnel, c'est-à-dire un champ très étroit dans une direction. Une image lE de l'espace peut bien sûr contenir plusieurs positions angulaires de débris différents, la figure 1 ne représentant le cas que d'un seul débris 6 pour des raisons de simplicité.

A partir de l'image IE de l'espace, des moyens 3 de détection déterminent la position angulaire PAD du débris 6 ainsi que l'amplitude ASRD du signal rétroréfléchi par le débris 6.

Des moyens 4 de localisation distance déterminent la distance DDS du débris 6 par rapport au satellite, par exemple par télémétrie laser. Pour cela, les moyens 2 de réception fournissent aux moyens 4 de localisation distance le temps de vol TVFL des impulsions du faisceau laser FL, c'est-à-dire le temps que les impulsions du faisceau laser FL ont mis pour parcourir l'aller et le retour entre le satellite et le débris 6 sur lequel le faisceau laser FL s'est réfléchi, que le faisceau laser FL soit impulsionnel ou continu à modulation.

Des moyens 5 de classification déterminent la classe CD du débris 6, c'est-à-dire le produit de l'albédo moyen du débris 6 par la surface apparente du débris 6, à partir de la distance DDS du débris 6 par rapport au satellite, distance qui est fournie par les moyens 4 de localisation distance, et à partir de l'amplitude ASRD du signal rétroréfléchi par le débris 6, amplitude qui est fournie par les moyens 3 de détection.

De préférence, le faisceau laser que peut émettre l'illuminateur laser 1 est un faisceau laser en forme de nappe suffisamment mince pour assurer un minimum donné de densité d'énergie sur une couverture spatiale angulaire donnée dans une direction, pour une portée donnée dans une application donnée. La nappe mince concentre l'énergie disponible au niveau de l'illuminateur laser 1 plus qu'un faisceau large ayant une forme couvrant un champ bidimensionnel dans l'espace. La nappe mince présente une meilleure couverture temporelle qu'un faisceau laser ponctuel associé à un dispositif de balayage, elle a, par rapport au faisceau laser ponctuel associé à un dispositif de balayage, le mérite de présenter une couverture spatiale simultanée. La nappe mince représente le meilleur compromis envisageable pour un dispositif de mesure de pollution spatiale basé sur l'utilisation d'un illuminateur laser, c'est-à-dire d'un imageur actif consistant en un illuminateur laser et des moyens de réception qui lui sont associés. Ce dispositif est tout particulièrement intéressant pour une gamme de la population des débris de taille intermédiaire, à savoir la population des débris submillimétriques, c'est-à-dire les débris dont la taille varie sensiblement de 100µm à 1mm, qui sont détectables à courte distance du satellite et pour lesquels la précision de détection est supérieure à ce qu'elle pourrait être avec un dispositif basé sur l'utilisation d'un imageur passif. La détection à des courtes distances typiquement inférieures à un mètre est particulièrement précise avec un dispositif de mesure de pollution spatiale selon l'invention. L'étroitesse de la nappe mince ne peut pas descendre au-dessous d'un certain seuil pour des raisons technologiques, tant au niveau de l'illuminateur laser qu'au niveau des moyens de réception et des autres moyens de traitement.

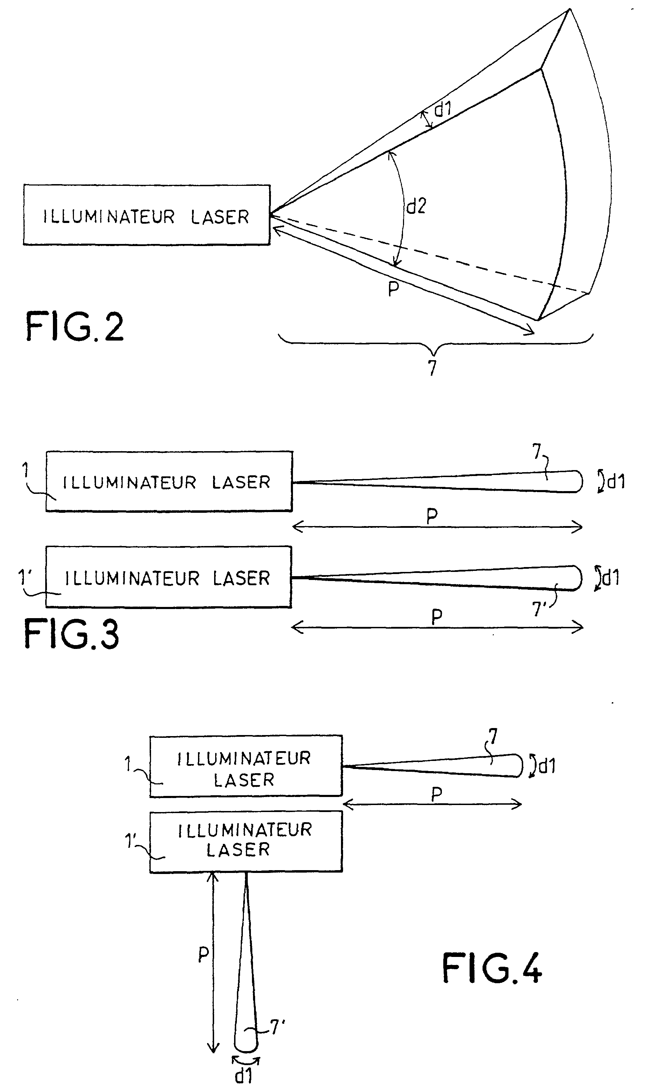

La figure 2 représente schématiquement une telle forme préférentielle de faisceau laser émis par l'illuminateur laser 1 d'un dispositif de mesure de pollution spatiale selon l'invention. Le faisceau laser émis par l'illuminateur laser 1 a une forme de nappe 7. La nappe 7 présente, respectivement en azimut et en site, une divergence angulaire d1 et une divergence angulaire d2. Le dispositif de mesure de pollution spatiale a une portée P variable, dépendant de la taille des débris détectés, la portée P représentée correspondant à une taille particulière de débris. La nappe 7 est suffisamment mince, c'est-à-dire que la petite divergence angulaire, par exemple d1 en azimut, est suffisamment faible, pour assurer, à une puissance donnée d'illuminateur laser 1, pour une portée donnée voulue par une application donnée, un minimum donné de densité d'énergie sur une couverture spatiale angulaire donnée, par exemple en site, correspondant au champ couvert par la grande divergence angulaire, par exemple d2 en site, de l'illuminateur laser 1. L'exemple choisi concerne une couverture spatiale en site, mais la nappe 7 peut couvrir un champ dans n'importe quelle direction de l'espace.

Le rapport entre les divergences angulaires d2 et d1 de la nappe 7 respectivement dans une direction, par exemple en site, et dans l'autre, par exemple en azimut, est préférentiellement supérieur à dix. Par exemple, la grande divergence angulaire d2 est de l'ordre d'une dizaine de degrés tandis que la petite divergence angulaire d1 est de l'ordre du milliradian. La réduction de la divergence angulaire la plus grande dans une direction donnée, par exemple la réduction de la grande divergence angulaire d2 en site, permet d'augmenter la densité d'énergie ainsi que le diamètre de l'optique d'entrée des moyens de réception. Ainsi, la portée de détection est encore augmentée, mais au détriment de la couverture spatiale du faisceau laser en forme de nappe mince.

De préférence, l'illuminateur émet dans le domaine spectral du visible, c'est-à-dire que la longueur d'onde de l'illuminateur laser est sensiblement comprise entre 0,4µm et 0,8µm. Cependant, l'illuminateur laser peut également émettre par exemple dans le domaine spectrale du proche infrarouge.

Dans un premier mode de réalisation, l'illuminateur laser est continu et modulé en amplitude ou en fréquence afin d'assurer la fonction télémétrie pour permettre aux moyens de localisation distance de déterminer la distance du débris par rapport au satellite. L'illuminateur laser est par exemple une diode laser continue. L'illuminateur laser continu ne présente pas de période aveugle, sa couverture temporelle est complète. Pour une classe de puissance électrique moyennne de quelques dizaines de Watts, dans des conditions standard, un illuminateur laser continu a une portée sensiblement comprise entre 1m et 100m. Les débris même proches peuvent être détectés dans ce mode de réalisation.

Dans un deuxième mode de réalisation préférentiel, l'illuminateur laser est impulsionnel afin d'assurer la fonction télémétrie pour permettre aux moyens de localisation distance de déterminer la distance du débris par rapport au satellite. L'illuminateur laser est par exemple une diode laser impulsionnelle ou un laser impulsionnel pompé, par exemple un laser YAG à 1,06µm dans le domaine proche infrarouge. Pour une classe de puissance électrique moyenne de quelques dizaines de Watts, dans des conditions standard, un illuminateur laser impulsionnel a une portée sensiblement comprise entre 20m et 1000m. Les débris trop proches ont tendance à « passer » entre les impulsions et à ne pas « être vus » par les moyens de réception puisque ces débris n'ont pas rétroréfléchi le faisceau laser émis par l'illuminateur laser impulsionnel. La portée est assez élevée dans ce mode de réalisation.

Dans les deux modes de réalisation, à partir de la localisation angulaire ou position angulaire du débris, et à partir de la distance du débris par rapport au satellite, obtenue par télémétrie laser, ainsi qu'à partir des informations concernant la position et l'attitude du satellite, le vecteur position du débris dans un repère absolu peut être établi.

Dans les deux modes de réalisation également, la largeur temporelle du signal rétroréfléchi par le débris permet d'accéder à la vitesse de défilement du débris. Cependant, la vitesse radiale du débris ainsi que la direction de la trajectoire, dans le cas d'un faisceau laser en forme de nappe mince, ne peut être déterminée qu'à l'aide d'une constellation de plusieurs illuminateurs laser judicieusement disposés dont plusieurs exemples seront décrits en liaison avec les figures 3 à 6.

De préférence, dans le cas d'un faisceau laser en forme de nappe mince, les moyens de réception comportent une barrette monodimensionnelle de détecteurs élémentaires. La barrette monodimensionnelle est disposée parallèlement à la grande dimension de la nappe. La barrette comporte avantageusement quelques dizaines de détecteurs élémentaires, par exemple 32. Les détecteurs élémentaires sont préférentiellement des photodiodes à avalanches.

L'ouverture de l'optique frontale des moyens de réception est avantageusement sensiblement comprise entre f/1 et f/2. Une optique très ouverte à f/1 est optimale, mais une optique ouverte à f/2 peut cependant convenir. Le diamètre de l'optique frontale des moyens de réception est préférentiellement sensiblement comprise entre 10mm et 100mm.

Les moyens de classification déterminent la classe d'un débris détecté par les moyens de détection et localisé par les moyens de localisation distance. La classe d'un débris est de préférence déterminée à partir de la distance dudit débris par rapport au satellite et à partir de l'amplitude du signal correspondant à la position angulaire dudit débris sur une image de l'espace, c'est-à-dire l'amplitude du signal rétroréfléchi par le débris. La distance du débris par rapport au satellite est fournie par les moyens de localisation distance tandis que l'amplitude du signal rétroréfléchi par le débris est fournie par les moyens de détection.

La classe du débris est le produit p surf de son albédo moyen p (ou réflectivité moyenne) par sa surface apparente surf (surface « vue » par les moyens de réception à partir du satellite). Dans une étape suivante, on peut, après avoir déterminé ou estimé l'albédo moyen p du débris, accéder à la surface apparente surf du débris, ce qui ensuite permet par l'intermédiaire de la distance du débris par rapport au satellite, de remonter à la taille du débris. Pour des débris d'une taille de l'ordre de la centaine de microns, la portée d'un dispositif de mesure de pollution spatiale selon l'invention peut être de l'ordre de quelques mètres avec une puissance électrique moyenne disponible au niveau de l'illuminateur laser valant quelques dizaines de Watts.

Afin de pouvoir remonter aux trajectoires des débris, ainsi qu'aux vitesses radiales des débris, en particulier dans le cas d'un illuminateur laser émettant un faisceau laser en forme de nappe mince, il est particulièrement avantageux que le dispositif de mesure de pollution spatiale comporte une constellation de plusieurs illuminateurs laser disposés judicieusement. Ces illuminateurs peuvent avoir une ou plusieurs parties communes, ils peuvent même être réunis en un illuminateur laser complexe si celui-ci peut émettre plusieurs faisceaux laser, de préférence en forme de nappe mince, judicieusement disposés. Les illuminateurs sont judicieusement disposés si leur disposition permet la détermination d'une part de la direction de déplacement ou trajectoire et/ou d'autre part de la vitesse des débris. D'autres moyens, comme par exemple les moyens 3 de détection, peuvent éventuellement être mis en commun. Un exemple possible consiste à mettre en commun les moyens 3 de détection, les moyens 4 de localisation et les moyens 5 de classification tandis que les illuminateurs laser 1 et les moyens 2 de réception restent distincts.

Plusieurs modes de disposition préférentiels de constellations d'illuminateurs laser vont maintenant être décrits en liaison avec les figures 3 à 6. Dans tous les exemples représentés sur les figures 3 à 6, tous les illuminateurs laser émettent des faisceaux laser qui ont des formes en nappes minces. Le plan de toutes les figures 3 à 6 représente une coupe des nappes minces, d1 étant la petite divergence angulaire de la nappe, d2 étant la grande divergence angulaire de la nappe représentant la couverture angulaire de la nappe, P étant la portée du dispositif de mesure de pollution spatiale pour une taille donnée de débris. Toutes les nappes minces d'une même figure sont de préférence égales entre elles.

Dans un premier mode de disposition préférentiel, le dispositif de mesure de pollution spatiale comporte deux illuminateurs laser dont les nappes respectives sont parallèles entre elles. La figure 3 représente un exemple de ce type de dispositif. Un premier illuminateur laser 1 émet un faisceau laser en forme de nappe mince 7 de petite divergence angulaire d1, la portée P du dispositif de mesure de pollution spatiale étant représentée. Un deuxième illuminateur laser 1' émet un faisceau laser en forme de nappe mince 7' de petite divergence angulaire d1. Les deux nappes minces 7 et 7' sont parallèles entre elles et perpendiculaires au plan de la figure 3.

Dans un deuxième mode de disposition préférentiel, le dispositif de mesure de pollution spatiale comporte deux illuminateurs laser dont les nappes respectives sont orthogonales entre elles. La figure 4 représente un exemple de ce type de dispositif. Un premier illuminateur laser 1 émet un faisceau laser en forme de nappe mince 7 de petite divergence angulaire d1, la portée P du dispositif de mesure de pollution spatiale étant représentée. Un deuxième illuminateur laser 1' émet un faisceau laser en forme de nappe mince 7' de petite divergence angulaire d1. Les deux nappes minces 7 et 7' sont orthogonales entre elles et perpendiculaires au plan de la figure 4.

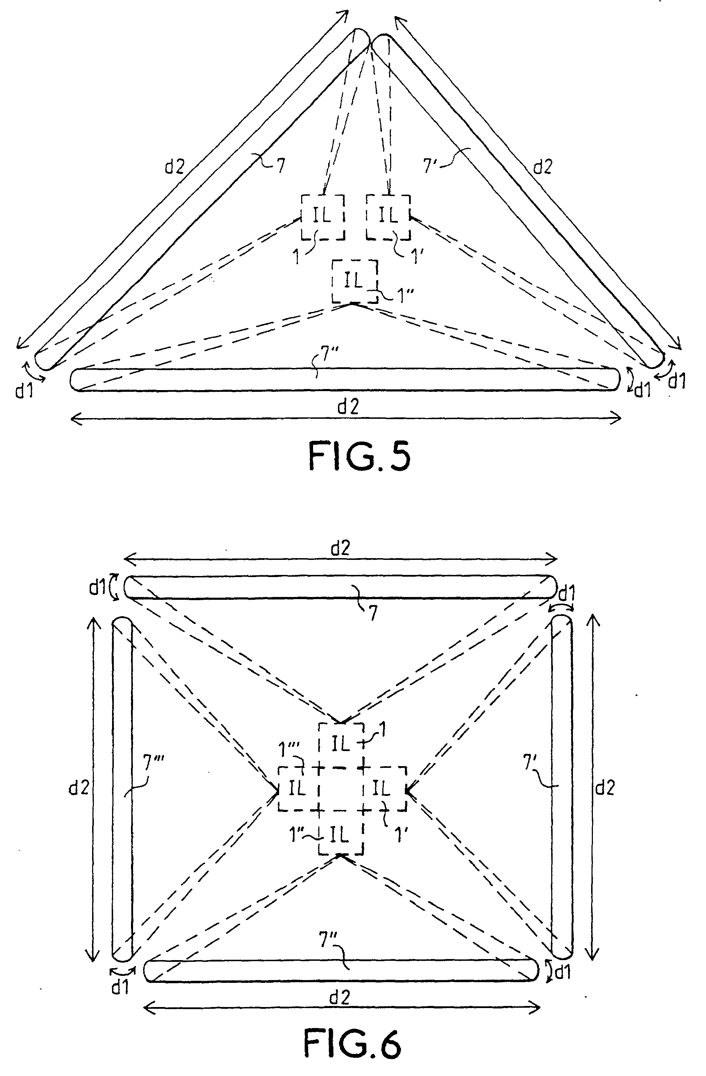

Dans un troisième mode de disposition préférentiel, le dispositif de mesure de pollution spatiale comporte au moins trois illuminateurs laser dont les nappes sont disposées de manière à définir un angle solide dans l'espace. Les figures 5 et 6 représentent chacune un exemple de ce type de dispositif avec respectivement 3 et 4 illuminateurs laser distincts. Sur les figures 5 et 6, les illuminateurs laser sont indiqués par l'abréviation IL.

Sur la figure 5, un premier illuminateur laser 1 émet un faisceau laser en forme de nappe mince 7, de grande divergence angulaire d2 et de petite divergence angulaire d1, la portée P du dispositif de mesure de pollution spatiale n'étant pas représentée. Un deuxième illuminateur laser 1' émet un faisceau laser en forme de nappe mince 7', de grande divergence angulaire d2 et de petite divergence angulaire d1. Un troisième illuminateur laser 1" émet un faisceau laser en forme de nappe mince 7", de grande divergence angulaire d2 et de petite divergence angulaire d1. Les trois nappes minces 7, 7' et 7" forment les trois côtés de la base d'une pyramide dont les illuminateurs laser 1, 1' et 1" représentés en traits pointillés se retrouvent au sommet en dehors du plan de la figure 5.

Sur la figure 6, quatre illuminateurs laser 1, 1', 1" et 1"' émettent respectivement quatre faisceaux laser chacun en forme de nappe mince 7, 7', 7" et 7"' et chacun de grande divergence d2 et de petite divergence d1. Les quatre nappes minces 7, 7', 7" et 7"' forment les quatre côtés de la base d'une pyramide dont les illuminateurs 1, 1', 1" et 1"' représentés en traits pointillés se retrouvent au sommet en dehors du plan de la figure 6.

Dans le cas d'une télémesure réalisée à partir du sol avec l'aide d'un satellite ayant embarqué un dispositif de mesure de pollution spatiale selon l'invention, ce dispositif de mesure de pollution spatiale comporte de préférence des moyens de communications avec une station terrestre. Les moyens de communications permettent au satellite d'envoyer des messages. Chaque message comprend plusieurs indications parmi lesquelles, une indication de date, une indication relative aux coordonnées et à l'attitude du satellite à ladite date, une indication relative à la classe d'un débris, une indication relative à la distance dudit débris par rapport au satellite à ladite date et une indication relative au vecteur vitesse dudit débris à ladite date.

L'utilisation d'un dispositif de mesure de pollution spatiale selon l'invention embarqué sur satellite et basé sur l'utilisation d'un illuminateur laser est particulièrement avantageuse, car le dispositif est toujours opérationnel indépendamment de l'éclairement solaire, il n'est pas sujet à des phases d'éclipse selon la position du soleil. L'utilisation d'un illuminateur laser qui est actif rend en outre le dispositif pratiquement insensible à des sources de perturbation lumineuse comme les étoiles fixes. De plus les distances des débris par rapport au satellite peuvent être facilement déterminées par télémétrie laser.

Le satellite sur lequel le dispositif de mesure de pollution spatiale est destiné à être embarqué est de préférence un minisatellite ou même un satellite de grande taille.

Plusieurs utilisations peuvent être faites des classes de débris déterminées par le dispositif de mesure de la pollution spatiale ainsi que de la vitesse des débris localisés. Par exemple, cette mesure de la pollution spatiale peut être utilisée pour recaler des modèles théoriques de mesure de pollution spatiale dans une gamme de débris dont la taille varie sensiblement de 100µm à 10cm.

Le dispositif de mesure spatiale selon l'invention peut aussi être associé à un détecteur de collision destiné à être embarqué sur tout satellite devant être mis sur orbite.

## Revendications

1. Dispositif de mesure de pollution spatiale, destiné à être embarqué sur satellite, comportant :
- au moins un illuminateur laser (1) pouvant émettre dans l'espace un faisceau laser (FL) ;
- des moyens (2) de réception du signal rétroréfléchi (SRD) par des débris spatiaux (6) ;
- des moyens (3) de détection des débris (6) qui traversent le faisceau laser (FL), déterminant la position angulaire (PAD) desdits débris (6) ;
- des moyens (4) de localisation distance des débris (6) détectés, déterminant les distances (DDS) des débris (6) détectés par rapport au satellite à l'aide du caractère impulsionnel et/ou modulé de l'émission du faisceau laser (FL) ;
- des moyens (5) de classification des débris (6) localisés, déterminant pour chaque débris (6) localisé le produit de son albédo moyen (p) par sa surface apparente (surf).

2. Dispositif de mesure de pollution spatiale selon la revendication 1, **caractérisé en ce que** le faisceau laser (FL) que peut émettre l'illuminateur laser (1) est un faisceau laser (FL) en forme de nappe (7) suffisamment mince pour assurer un minimum donné de densité d'énergie sur une couverture spatiale angulaire donnée dans une direction.

3. Dispositif de mesure de pollution spatiale selon la revendication 2, **caractérisé en ce que** le rapport entre les divergences angulaires de la nappe respectivement dans une direction (d2) et dans l'autre (d1) est supérieur à dix.

4. Dispositif de mesure de pollution spatiale selon la revendication 3, **caractérisé en ce que** la divergence angulaire est de l'ordre d'une dizaine de degrés dans une direction (d2) et de l'ordre du milliradian dans l'autre direction (d1).

5. Dispositif de mesure de pollution spatiale selon l'une quelconque des revendications 1 à 4, **caractérisé en ce que** l'illuminateur laser (1) émet dans le domaine spectral du visible.

6. Dispositif de mesure de pollution spatiale selon l'une quelconque des revendications 1 à 4, **caractérisé en ce que** l'illuminateur laser (1) émet dans le domaine spectral du proche infrarouge.

7. Dispositif de mesure de pollution spatiale selon l'une quelconque des revendications 1 à 6, **caractérisé en ce que** l'illuminateur laser (1) est continu et modulé en amplitude ou en fréquence.

8. Dispositif de mesure de pollution spatiale selon l'une quelconque des revendications 1 à 6, **caractérisé en ce que** l'illuminateur laser (1) est impulsionnel.

9. Dispositif de mesure de pollution spatiale selon l'une quelconque des revendications précédentes, **caractérisé en ce que** les moyens (2) de réception comportent une barrette monodimensionnelle de détecteurs élémentaires.

10. Dispositif de mesure de pollution spatiale selon la revendication 9, **caractérisé en ce que** la barrette comporte quelques dizaines de détecteurs élémentaires.

11. Dispositif de mesure de pollution spatiale selon l'une quelconque des revendications 9 à 10, **caractérisé en ce que** les détecteurs élémentaires sont des photodiodes à avalanches.

12. Dispositif de mesure de pollution spatiale selon l'une quelconque des revendications précédentes, **caractérisé en ce que** l'ouverture de l'optique frontale des moyens (2) de réception est sensiblement comprise entre f/1 et f/2.

13. Dispositif de mesure de pollution spatiale selon l'une quelconque des revendications précédentes, **caractérisé en ce que** la classe (CD) d'un débris (6) est déterminée à partir de la distance (DDS) dudit débris (6) par rapport au satellite et à partir de l'amplitude (ASRD) du signal rétroréfléchi par ledit débris (6).

14. Dispositif de mesure de pollution spatiale selon l'une quelconque des revendications précédentes, **caractérisé en ce que** le dispositif de mesure de pollution spatiale comporte plusieurs illuminateurs laser (1) disposés de manière à permettre la détermination de la direction de déplacement et/ou de la vitesse des débris (6).

15. Dispositif de mesure de pollution spatiale selon la revendication 14, **caractérisé en ce que** le dispositif de mesure de pollution spatiale comporte deux illuminateurs laser (1, 1') dont les nappes respectives (7, 7') sont parallèles entre elles.

16. Dispositif de mesure de pollution spatiale selon la revendication 14, **caractérisé en ce que** le dispositif de mesure de pollution spatiale comporte deux illuminateurs laser (1, 1') dont les nappes respectives (7, 7') sont orthogonales entre elles.

17. Dispositif de mesure de pollution spatiale selon la revendication 14, **caractérisé en ce que** le dispositif de mesure de pollution spatiale comporte au moins trois illuminateurs laser (1, 1', 1",) dont les nappes respectives (7, 7', 7",) sont disposées de manière à définir un angle solide dans l'espace.

18. Dispositif de mesure de pollution spatiale selon l'une quelconque des revendications 14 à 17, **caractérisé en ce que** le dispositif de mesure de pollution spatiale comporte des moyens de communications avec une station terrestre, les moyens de communications permettant au satellite d'envoyer des messages comprenant chacun :
- une indication de date ;
- une indication relative aux coordonnées et à l'attitude du satellite à ladite date ;
- une indication relative à la classe (CD) d'un débris (6) ;
- une indication relative à la distance (DDS) dudit débris (6) par rapport au satellite à ladite date ;
- une indication relative au vecteur vitesse dudit débris (6) à ladite date.

19. Dispositif de mesure de pollution spatiale selon l'une quelconque des revendications précédentes, **caractérisé en ce que** le satellite sur lequel le dispositif de mesure de pollution spatiale est destiné à être embarqué est un minisatellite.

20. Utilisation d'un dispositif de mesure de pollution spatiale selon l'une quelconque des revendications 1 à 19, pour recaler des modèles théoriques de mesure de pollution spatiale dans une gamme de débris dont la taille varie sensiblement de 100µm à 10cm.

21. Détecteur de collision étant destiné à être embarqué sur satellite et comportant un dispositif de mesure de pollution spatiale selon l'une quelconque des revendications 1 à 19.

## Claims

1. Device for measuring pollution in space, intended to be mounted on board a satellite, comprising:
- at least one laser illuminator (1) able to emit a laser beam (FL) into space;
- means (2) for receiving the debris back-reflected signal (SRD) back-reflected by space debris (6);
- means (3) for detecting the debris (6) that passes through the laser beam (FL), determining the angular position (PAD) of the said debris (6);
- means (4) for pinpointing the distance of the detected debris (6), determining the distances (DDS) from the satellite of the detected debris (6), using the pulse and/or modulated emission character of the laser beam (FL); and
- means (5) for classifying the pinpointed debris (6), determining, for each pinpointed item of debris (6), the product of its mean albedo (p) multiplied by its apparent surface area (surf).

2. Device for measuring pollution in space according to Claim 1, **characterized in that** the laser beam (FL) that the laser illuminator (1) can emit is a laser beam (FL) in the form of a sheet (7) thin enough to ensure a given minimum energy density over a given angular coverage of space in one direction.

3. Device for measuring pollution in space according to Claim 2, **characterized in that** the ratio of the angular divergence of the sheet in one direction (d2) to the other direction (d1), respectively, is greater than ten.

4. Device for measuring pollution in space according to Claim 3, **characterized in that** the angular divergence is of the order of some ten degrees in one direction (d2) and of the order of a milliradian in the other direction (d1).

5. Device for measuring pollution in space according to any one of Claims 1 to 4, **characterized in that** the laser illuminator (1) emits in the visible spectral range.

6. Device for measuring pollution in space according to any one of Claims 1 to 4, **characterized in that** the laser illuminator (1) emits in the near infrared spectral range.

7. Device for measuring pollution in space according to any one of Claims 1 to 6, **characterized in that** the laser illuminator (1) is continuous and amplitude-modulated or frequency-modulated.

8. Device for measuring pollution in space according to any one of Claims 1 to 6, **characterized in that** the laser illuminator (1) is pulsed.

9. Device for measuring pollution in space according to any one of the preceding claims, **characterized in that** the receiving means (2) comprise a one-dimensional array of elementary detectors.

10. Device for measuring pollution in space according to Claim 9, **characterized in that** the array comprises several tens of elementary detectors.

11. Device for measuring pollution in space according to either of Claims 9 and 10, **characterized in that** the elementary detectors are avalanche photodiodes.

12. Device for measuring pollution in space according to any one of the preceding claims, **characterized in that** the aperture of the front optic of the receiving means (2) is substantially between f/1 and f/2.

13. Device for measuring pollution in space according to any one of the preceding claims, **characterized in that** the debris class (CD) of an item of debris (6) is determined on the basis of the distance (DDS) of the said debris (6) from the satellite and on the basis of the amplitude (ASRD) of the signal back-reflected by the said debris (6) .

14. Device for measuring pollution in space according to any one of the preceding claims, **characterized in that** the device for measuring pollution in space comprises several laser illuminators (1) placed so as to allow the direction of movement and/or the speed of the debris (6) to be determined.

15. Device for measuring pollution in space according to Claim 14, **characterized in that** the device for measuring pollution in space comprises two laser illuminators (1, 1'), the respective sheets (7, 7') of which are mutually parallel.

16. Device for measuring pollution in space according to Claim 14, **characterized in that** the device for measuring pollution in space comprises two laser illuminators (1, 1'), the respective sheets (7, 7') of which are mutually orthogonal.

17. Device for measuring pollution in space according to Claim 14, **characterized in that** the device for measuring pollution in space comprises at least three laser illuminators (1, 1', 1''), the respective sheets (7, 7', 7'') of which are placed so as to define a solid angle in space.

18. Device for measuring pollution in space according to any one of Claims 14 to 17, **characterized in that** the device for measuring pollution in space comprises means of communication with an Earth station, the communication means allowing the satellite to send messages, each comprising:
- a date indication;
- an indication relating to the coordinates and to the attitude of the satellite on the said date;
- an indication relating to the class (CD) of an item of debris (6);
- an indication relating to the distance (DDS) of the said debris (6) from the satellite on the said date; and
- an indication relating to the velocity vector of the said debris (6) on the said date.

19. Device for measuring pollution in space according to any one of the preceding claims, **characterized in that** the satellite on board which the device for measuring pollution in space is intended to be mounted is a minisatellite.

20. Use of a device for measuring pollution in space according to any one of Claims 1 to 19 for recalibrating theoretical models of the measurement of pollution in space within a range of debris whose size varies from about 100 µm to 10 cm.

21. Collision detector, intended to be mounted on board a satellite and comprising a device for measuring pollution in space according to any one of Claims 1 to 19.

## Patentansprüche

1. Vorrichtung zur Messung der Verunreinigung des Weltraums, zur Mitführung in Satelliten, enthaltend:
- wenigstens eine Laser-Beleuchtungsquelle (1), die ein Laserbündel (FL) in den Raum aussenden kann;
- Mittel (2) zum Empfangen des durch Trümmerteile (6) zurückreflektierten Signals (SRD);
- Mittel (3) zur Detektion von Trümmerteilen (6), die das Laserbündel (FL) durchqueren, zur Bestimmung der Winkelposition (PAD) dieser Trümmerteile (6);
- Mittel (4) zur Entfernungsbestimmung an den erkannten Trümmerteilen (6), zur Bestimmung der Entfernungen (DDS) der erkannten Trümmerteile (6) in bezug auf den Satelliten anhand des Impulscharakters und/oder Modulationscharakters des ausgestrahlten Laserbündels (FL);
- Mittel (5) zur Klassifizierung der georteten Trümmerteile (6), welche für jedes geortete Trümmerteil (6) das Produkt seines mittleren Remissionsgrades (p) mit der aufscheinenden Oberfläche (surf) bilden.

2. Vorrichtung zur Messung der Weltraumverunreinigung nach Anspruch 1, **dadurch gekennzeichnet, daß** das Laserbündel (FL), das die Laser-Beleuchtungsquelle (1) ausstrahlen kann, ein Laserbündel (FL) in Form eines ausreichend dünnen Fächers ist, um ein gegebenes Minimum an Energiedichte über einen gegebenen Raumwinkelbereich in einer Richtung zu gewährleisten.

3. Vorrichtung zur Messung der Weltraumverunreinigung nach Anspruch 2, **dadurch gekennzeichnet, daß** das Verhältnis zwischen den Winkeldivergenzwerten des Fächers in der einen Richtung (d2) und in der anderen (d1) größer als zehn ist.

4. Vorrichtung zur Messung der Weltraumverunreinigung nach Anspruch 3, **dadurch gekennzeichnet, daß** die Winkeldivergenz in einer Richtung (d2) in der Größenordnung von zehn Grad und in der anderen Richtung (d1) in der Größenordnung eines Milliradian liegt.

5. Vorrichtung zur Messung der Weltraumverunreinigung nach einem der Ansprüche 1 bis 4, **dadurch gekennzeichnet, daß** die Laser-Beleuchtungsquelle (1) in einem sichtbaren Spektralbereich emittiert.

6. Vorrichtung zur Messung der Weltraumverunreinigung nach einem der Ansprüche 1 bis 4, **dadurch gekennzeichnet, daß** die Laser-Beleuchtungsquelle (1) im nahen Infrarotspektralbereich emittiert.

7. Vorrichtung zur Messung der Weltraumverunreinigung nach einem der Ansprüche 1 bis 6, **dadurch gekennzeichnet, daß** die Laser-Beleuchtungsquelle (1) mit Amplituden- oder Frequenzmodulation im Dauerstrich betrieben wird.

8. Vorrichtung zur Messung der Weltraumverunreinigung nach einem der Ansprüche 1 bis 6, **dadurch gekennzeichnet, daß** die Laser-Beleuchtungsquelle (1) Impulse liefert.

9. Vorrichtung zur Messung der Weltraumverunreinigung nach einem der vorstehenden Ansprüche, **dadurch gekennzeichnet, daß** die Empfangsmittel (2) eine eindimensionale Zeile aus elementaren Detektorelementen enthält.

10. Vorrichtung zur Messung der Weltraumverunreinigung nach Anspruch 9, **dadurch gekennzeichnet, daß** die Zeile einige zehn elementare Detektorelemente enthält.

11. Vorrichtung zur Messung der Weltraumverunreinigung nach einem der Ansprüche 9 bis 10, **dadurch gekennzeichnet, daß** die Detektorelemente Avalanche-Photodioden sind.

12. Vorrichtung zur Messung der Wltraumverunreinigung nach einem der vorstehenden Ansprüche, **dadurch gekennzeichnet, daß** die optische Eintrittsblende der Empfangsmittel (2) im wesentlichen einen Wert zwischen f/1 und f/2 hat.

13. Vorrichtung zur Messung der Weltraumverunreinigung nach einem der vorstehenden Ansprüche, **dadurch gekennzeichnet, daß** die Klasse (CD) eines Trümmerteils (6) aus der Entfernung (DDS) des Trümmerteils (6) in bezug auf den Satelliten und aus der Amplitude (ASRD) des von dem Trümmerteil (6) zurückreflektierten Signals bestimmt wird.

14. Vorrichtung zur Messung der Weltraumverunreinigung nach einem der vorstehenden Ansprüche, **dadurch gekennzeichnet, daß** die Vorrichtung zur Messung der Weltraumverunreinigung mehrere Laser-Beleuchtungsquellen (1) enthält, die in solcher Weise angeordnet sind, daß die Bestimmung der Bewegungsrichtung und/oder der Geschwindigkeit der Trümmerteile (6) ermöglicht wird.

15. Vorrichtung zur Messung der Weltraumverunreinigung nach Anspruch 14, **dadurch gekennzeichnet, daß** die Vorrichtung zur Messung der Weltraumverunreinigung zwei Laser-Beleuchtungsquellen (1, 1') aufweist, deren Strahlfächer (7, 7') zueinander parallel sind.

16. Vorrichtung zur Messung der Weltraumverunreinigung nach Anspruch 14, **dadurch gekennzeichnet, daß** die Vorrichtung zur Messung der Weltraumverunreinigung zwei Laser-Beleuchtungsquellen (1, 1') aufweist, deren Strahlfächer (7, 7') zueinander senkrecht sind.

17. Vorrichtung zur Messung der Weltraumverunreinigung nach Anspruch 14, **dadurch gekennzeichnet, daß** die Vorrichtung zur Messung der Weltraumverunreinigung wenigstens drei Laser-Beleuchtungsquellen (1, 1', 1") aufweist, deren Strahlfächer (7, 7', 7") in solcher Weise angeordnet sind, daß sie einen Raumwinkel definieren.

18. Vorrichtung zur Messung der Weltraumverunreinigung nach einem der Ansprüche 14 bis 17, **dadurch gekennzeichnet, daß** die Vorrichtung zur Messung der Weltraumverunreinigung Mittel zur Kommunikation mit einer Bodenstation enthält, wobei die Mittel zur Kommunikation es dem Satelliten ermöglichen, Nachrichten auszusenden, die jeweils enthalten:
- eine Datumsangabe;
- eine Angabe bezüglich der Koordinaten und der Höhe des Satelliten an diesem Datum;
- eine Angabe bezüglich der Klasse (CD) eines Trümmerteils (6);
- eine Angabe bezüglich der Entfernung (DDS) des Trümmerteils (6) in bezug auf den Satelliten an dem Datum;
- eine Angabe bezüglich des Geschwindigkeitsvektors des Trümmerteils (6) an diesem Datum.

19. Vorrichtung zur Messung der Weltraumverunreinigung nach einem der vorstehenden Ansprüche, **dadurch gekennzeichnet, daß** der Satellit, in dem die Vorrichtung zur Messung der Weltraumverunreinigung mitgeführt werden soll, ein Minisatellit ist.

20. Verwendung einer Vorrichtung zur Messung der Weltraumverunreinigung nach einem der Ansprüche 1 bis 19 zur Kalibrierung von theoretischen Modellen zur Messung der Weltraumverunreinigung in einem Bereich von Trümmerteilen, deren Größe im wesentlichen von 100 µm bis 10 cm variiert.

21. Kollisionsdetektor, der dazu bestimmt ist, in einem Satellit mitgeführt zu werden, mit einer Vorrichtung zur Messung der Weltraumverunreinigung nach einem der Ansprüche 1 bis 19.
